Europäisches Patentamt

European Patent Office

Office européen des brevets

(11) Publication number: **0 303 270 B1**

(12) **EUROPEAN PATENT SPECIFICATION**

(45) Date of publication of patent specification: **21.11.91** (51) Int. Cl.5: **B05C 21/00, B29C 33/10,**
**B29C 67/22, B05D 1/32**

(21) Application number: **88113064.5**

(22) Date of filing: **11.08.88**

(54) **A panel type masking member.**

(30) Priority: **12.08.87 JP 201310/87**

(43) Date of publication of application:
**15.02.89 Bulletin 89/07**

(45) Publication of the grant of the patent:
**21.11.91 Bulletin 91/47**

(84) Designated Contracting States:
**DE FR GB IT SE**

(56) References cited:
**EP-A- 0 207 720**
**EP-A- 0 262 946**
**DE-A- 3 115 773**
**FR-A- 2 384 683**

**PATENT ABSTRACTS OF JAPAN, vol. 7, no.**
**287 (M-264)[1432], 21st December 1983; &**
**JP-A-58 162 331 (DAIKEN KOGYO K.K.)**
**27-09-1983**

(73) Proprietor: **NAGOYA OILCHEMICAL CO., LTD.**
**213-5 Honowari Minamishibata-cho**
**Tokai-shi Aichi(JP)**

(72) Inventor: **Horiki, Seinosuke c/o NAGOYA OIL-**
**CHEMICAL CO.,LTD.**
**213-5 Honowari Minamishibata-cho**
**Tokai-shi Aichi(JP)**
Inventor: **Makino, Reiji c/o NAGOYA OILCHEM-**
**ICAL CO.,LTD.**
**213-5 Honowari Minamishibata-cho**
**Tokai-shi Aichi(JP)**

(74) Representative: **Vossius & Partner**
**Siebertstrasse 4 P.O. Box 86 07 67**
**W-8000 München 86(DE)**

## Description

The instant invention relates to a panel type masking member used to protect a part of an article such as the underside of the floor of the cars, and the like from a surface treatment such as coating, plating, phosphatizing and the like, and a mold used for molding of said panel type masking member.

More particularly, the instant invention relates to a panel type masking member comprising a foamed polystyrene panel made by expandable bead molding wherein said foamed polystyrene panel has trace(s) of the opening parts of breathing paths on both sides thereof wherein said trace(s) on at least one side is(are) dent(s), and a mold used for molding of said panel type masking member comprising a fixed molding part and a movable molding part wherein said fixed molding part and said movable molding part have opening parts of breathing paths on their surface(s) thereof and said opening part(s) of said breathing path(s) of said movable molding part and/or said fixed molding part rise(s) from said surface(s) thereof; are provided in the instant invention.

Hitherto, adhesive tapes have been used as a masking member to protect a part of an article such as the underside of the floor of the cars and the like from a surface treatment, such as coating, plating, phosphatizing and the like. Namely, the adhesive tapes are attached to a part of an article to protect it from a surface treatment and after the surface treatment, said adhesive tapes are removed from the part of the article. Said part is not affected by said surface treatment since said part was covered with the adhesive tapes during the surface treatment.

Nevertheless, said adhesive tapes as the masking member has faults that in case that the part to be protected from the surface treatment is wide, it is troublesome to attach the adhesive tapes to the part to be protected and remove said adhesive tapes from said part since a number of strips of adhesive tapes must be attached to said part to cover the whole part, and further, in the case that adhesive tapes are subjected to heat, said adhesive tapes stick to the part due to heating and the stripping of said adhesive tapes becomes very difficult.

EP-A-0 207 720 describes a masking member comprising a panel of plastic foam wherein an adhesive layer and a release sheet which covers said adhesive layer are applied on one side of said panel. Said panel type masking member is attached to a part of an article to be protected by an adhesive coating layer formed on a side of said panel. Said foamed polystyrene panel of said masking member has been made by expandable bead molding using a mold comprising a fixed molding part and a movable molding part wherein said fixed molding part and said movable molding part have opening parts of breathing paths on their surfaces thereof. Since said opening parts of breathing said paths are dented from said surfaces of said fixed molding part and said movable molding part, said foamed polystyrene panel has rising parts which are traces of said opening parts of breathing paths, and said rising parts of said foamed polystyrene panel obstruct the smooth coating of the adhesive on the surface of said foamed polystyrene, and further an opening is foamed between the circumference of said rising parts of said foamed polystyrene panel of the masking member and a part of an article to which said masking member is attached, and as the result, said masking member is apt to slip on said part of said article or is apt to slip out from said part of said article, and still further, since the surface-treating agent enters into said opening between said circumference of said rising part of said foamed polystyrene panel and said part of said article, the complete protection of the masking member cannot be expected.

Accordingly, an object of the instant invention is to save trouble when the adhesive is coated on the surface of said foamed polystyrene panel of the masking member.

A further object of the instant invention is to prevent slipping of the masking member on a part of an article to which the masking member is attached or prevent the masking member from slipping out from said part of said article.

Still a further object of the instant invention is to prevent the surface-treating agent going into the opening between the masking member and said part of said article and to attain the complete protection of the masking member for said part of said article.

Briefly, these objects of the instant invention can be attained by a panel type masking member comprising a foamed polystyrene panel made by expandable bead molding wherein said foamed polystyrene panel has traces of the opening parts of breathing paths on both sides thereof. Said panel type masking member may be molded by a mold comprising a fixed molding part and a movable molding part wherein said movable molding part and said fixed molding part have opening parts of breathing paths on their surface(s) thereof and said opening part(s) of said breathing path(s) rise(s) from said surface(s) thereof.

The invention will be further described in detail in connection with the drawings in which Figure 1 to Figure 7 relate to a first embodiment of the instant invention, and Figure 8 to Figure 10 relate to further embodiments of the invention.

Figure 1 is a side sectional view of a mold,

Figure 2 is a partial perspective view of said mold,

Figure 3 is a side sectional view of said mold into which polystyrene expandable beads are charged, Figure 4 is a perspective view of a masking member made by using said mold, Figure 5 is a side view of said masking member on whose surface an adhesive coating layer is foamed and said adhesive coating layer is covered with a release sheet,

Figure 6 is a partial perspective view of an article, to whose part said masking member is attached and a surface treatment is carried out on said part of said article, and

Figure 7 is a partial perspective view of said article from whose part, said masking member has been removed after said surface treatment.

Figure 8 is a side view of a masking member relating to another embodiment of the instant invention.

Figure 9 is a partial perspective view of a mold of another embodiment.

Figure 10 is a partial perspective view of a mold of still another embodiment.

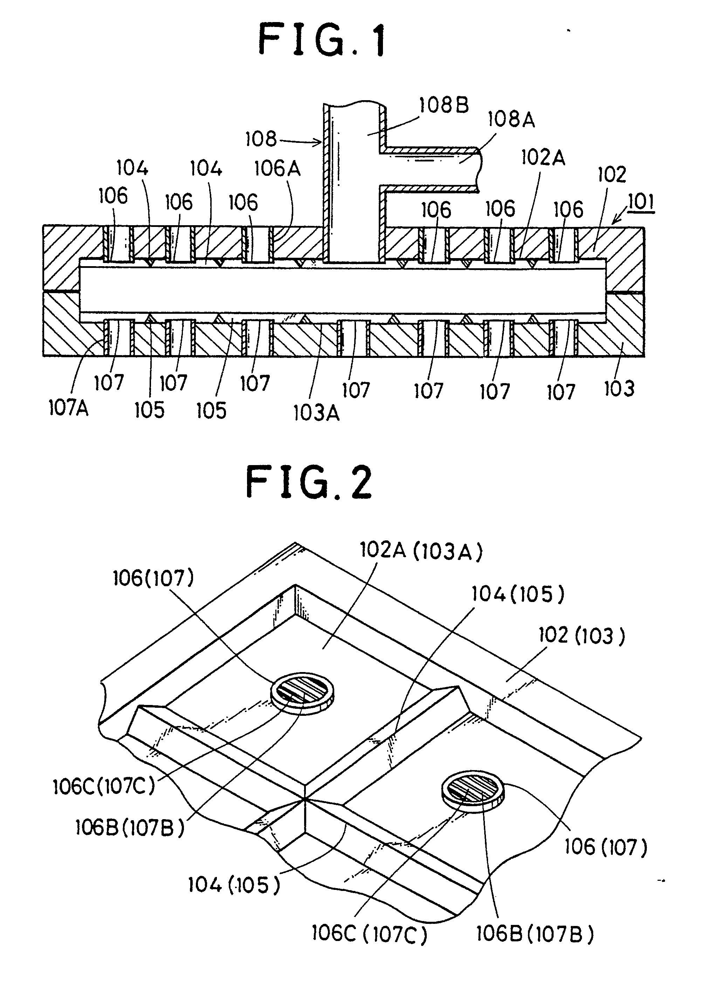

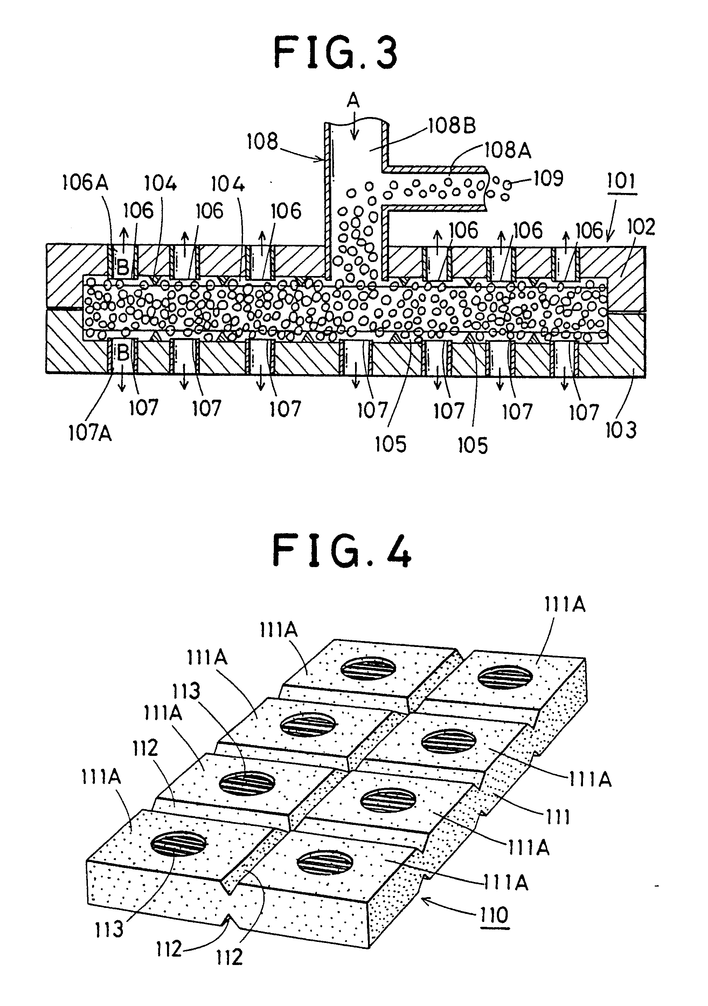

Figure 1 to Figure 7 relate to an embodiment of the instant invention. Referring now to Figure 1 and Figure 2, a mold 101 is used for the molding of a masking member and comprises a fixed molding part 102 and a movable molding part 103 . The surfaces 102A and 103A of said fixed molding part 102 and said movable molding part 103 are checkered by ridges 104 and 105 and opening parts 106 and 107 of breathing paths 106A and 107A are arranged on the surfaces of each block 102A and 103A enclosed by said ridges 104 and 105 . Said opening parts 106 and 107 rise from said surfaces of said blocks 102A and 103A and a plural number of partitions 106B and 107B are arranged in each of said breathing paths 106A and 107A to form slits 106C and 107C . Heights of said rising opening parts 106 and 107 are commonly from about 0.2 to about 0.5 mm. A charging means 108 for expandable polystyrene beads connects to said fixed molding part 102 of said mold 101 and said charging means 108 consists of a path 108A to charge said expandable polystyrene beads into said mold 101 and a path 108B to supply steam into said mold 101 . To mold a masking member comprising a foamed polystyrene panel, said fixed molding part 102 and said movable molding part 103 are combined together to set up said mold 101 and steam is supplied into said mold 101 through said path 108B of said charging means 108 as shown in Figure 3,Arrow A, then expandable polystyrene beads 109 are sucked into said mold 101 through said path 108A by the stream of said steam as shown in Figure 3, Arrow B. Air in said mold 101 and said steam supplied into said mold 101 are exhausted from said breathing paths 106A and 107A of said fixed molding part 102 and said movable molding part 103 so that said expandable polystyrene beads 109 are uniformly charged into said mold 101 . Further, width of said slits 106C and 107C of said breathing paths 106A and 107A are established to be smaller than the diameter of said expandable polystyrene beads 109 to prevent leakage of said expandable polystyrene beads 109 from said breathing paths 106A and 107A . Said expandable polystyrene beads 109 charged into said mold 101 are heated by said steam to expand and a masking member 110 comprising a foamed polystyrene panel shown in Figure 4 is molded. During said molding, the gas of a blowing agent is also exhausted from said breathing paths 106A and 107A of said fixed molding part 102 and said movable molding part 103 so that said expandable polystyrene beads 109 uniformly expand in said mold 101 to form said foamed polystyrene panel having a uniform cellular structure.

As shown in Figure 4, the resulting masking member 110 comprises a foamed polystyrene panel 111 and checker grooves 112 are formed at regular intervals on both sides of said panel 111 wherein said grooves 112 are formed directly opposite each other. Said grooves 112 are formed by said ridges 104 and 105 on said surfaces 102A and 103A of said fixed molding part 102 and said movable molding part 103 of Figure 3. Further, dents 113 which are traces of the opening parts 106 and 107 of breathing paths 106A and 107A , are formed on both sides of each block 111A enclosed by said grooves 112 .

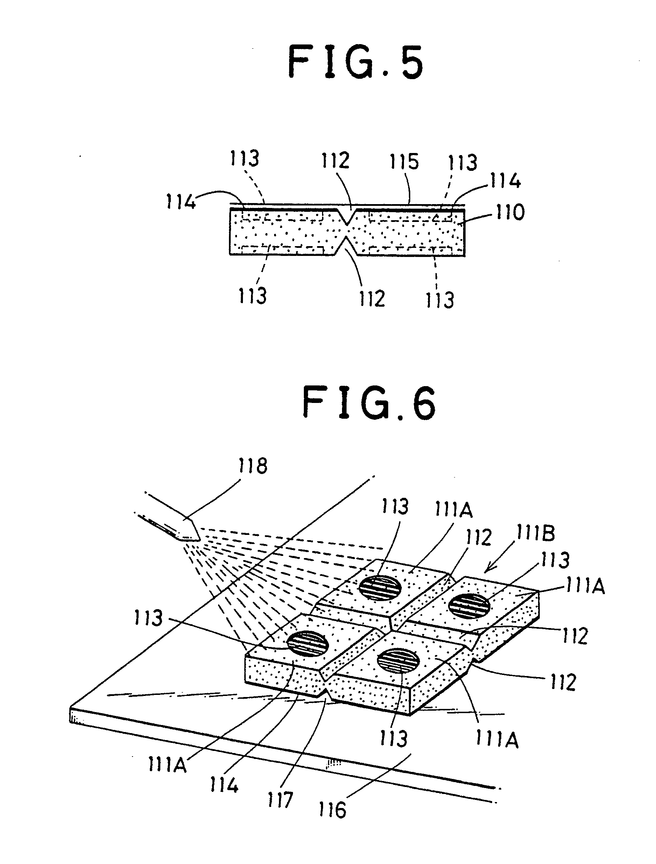

As shown in Figure 5, an adhesive is coated on one side of said panel 111 to form an adhesive coating layer 114 and said adhesive can be smoothly and uniformly coated on one side of said panel 111 by a coating machine such as a roll coater, knife coater, and the like since said panel 111 has no rising part on its surface. Further, said adhesive coating layer 114 is not formed on said dents 113 of each block 111A and is covered with a release sheet 115 such as a polyethylene film, a polypropylene film, a release paper, and the like to prevent sticking to another article, hands of workers, and the like when said masking member 110 is handled: one placed upon another transported, and the like.

When the masking member 110 is used as shown in Figure 6, said release sheet 115 is removed from said adhesive coating layer 114 and said panel 111 is snapped along said grooves 112 by hand to a piece 111B having the proper size corresponding with a part 117 of an article 116 which is necessary to be protected from a surface treatment such as coating, plating, phosphatizing and the like. The resulting piece 111A is then attached to a part 117 of said on article 116 by said adhesive coating layer 114 thereof.

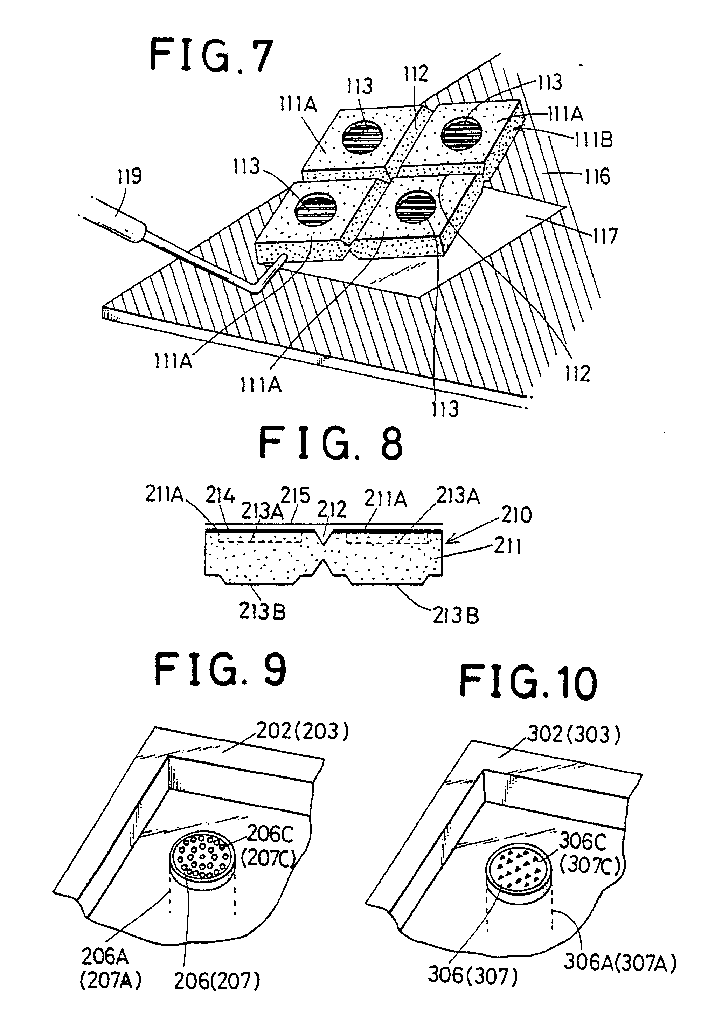

In the case of said coating, a coating material, such as a paint, a polyvinylchloride plastisol, and the like is sprayed from a spray gun 118 on the surface of said article 116 . Said part 117 of said article 116 is not subjected to said coating since said part 117 is covered with said piece 111A of the masking member 110 . After coating, said coated article 116 is heated to dry and/or cure if desired. After or before said heating, said piece 111A of said masking member 110 is stripped by a hook 119 as shown in Figure 7 or by hand or in a case where the heating temperature is higher enough than the softening point of foamed polystyrene, as the material of said panel 111 of said masking member 110 , said piece 111A will shrink itself by said heating and come off by itself from said part 117 of said article 116 .

As before described, since said piece 111A of said masking member 110 has dents 113 on its surface, said piece 111A partially attached to said part 117 of said article 116 by said adhesive coating layer 113 which is not formed on said dents 113 of each block 111A so that said piece 111A of said masking member 110 is very easily removed from said part 117 of said article 116 . This property of said masking member 110 is very significant for a continuous process such as the process of anti-corrosion, and sound and vibration-proof treatment for the underside of cars.

Figure 8 relates to another embodiment of the instant invention. In this embodiment, a masking member 210 comprises a foamed polystyrene panel 211 and checker grooves 212 are formed at regular intervals on one side of said panel 211 . Traces 213A and 213B of opening parts of breathing paths are formed on both sides of each blocks 211A and said traces 213A are dents on one side of said panel 211 while said traces 213B are rising parts on the other side of said panel 211 . Further an adhesive coating layer 214 covered with a release sheet 215 is formed on said one side of said panel 211 .

Figure 9 relates to still another embodiment of the instant invention. In this embodiment, the opening parts 206 and 207 of the breathing paths 206A and 207A of the fixed molding part 202 and said movable molding part 203 have small round holes 206C and 207C instead of slits 106C and 107C of the foregoing embodiment.

Figure 10 relates to still another embodiment of the instant invention. In this embodiment, the opening parts 306 and 307 of the breathing paths 306A and 307A of the fixed molding part 302 and the movable molding part 303 have small trianglar holes 306C and 307C instead of slits 106C and 107C , and small round holes 206C and 207C of the foregoing embodiments.

Further, said ridges 104 and 105 of said mold 101 are not always necessary. In a case where said mold 101 has no ridge(s), said grooves 112 of said masking member 110 may be formed by such as cutting after said masking member 110 is molded. Nevertheless, said grooves 112 of said masking member 110 are not always necessary for the instant invention.

## Claims

1. A panel type masking member comprising a foamed polystyrene panel (111) made by expandable bead molding and an adhesive coating layer (114) formed on one side of said foamed polystyrene panel (111) characterized in that said foamed polystyrene panel comprises at least one dent (113) on at least one side on which said adhesive coating layer (114) is formed and said dent is a trace of an opening part of a breathing part of a mold (101) which rises from the surface of the mold.

2. A panel type masking member in accordance with Claim 1, wherein said adhesive coating layer is covered with a release sheet (115).

3. A mold used for molding of said foamed polystyrene panel of said masking member in accordance with Claim 1 or 2, comprising a movable molding part and a fixed molding part wherein said movable molding part and said fixed molding part have at least one opening part of the breathing paths on their surfaces and said opening part(s) of said breathing path(s) of said movable molding part and/or said fixed molding part rise(s) from said surface(s).

4. A coating method comprising attaching a panel type masking member in accordance with any of Claims 1 to 3 to a part of an article to be protected, coating a coating material on said part of said article, and removing said panel type masking member from said part of said article.

5. A coating method in accordance with Claim 4, wherein said article is the underside of the floor of a car.

6. An article treated by a coating method in accordance with Claims 4 or 5.

## Revendications

1. Cache du type panneau comprenant un panneau en polystyrène mousse (111) réalisé par moulage de perles expansibles et une couche de revêtement adhésive (114) formée sur un côté du panneau en polystyrène mousse (111), caractérisé en ce que le panneau en polystyrène mousse comprend au moins une indentation (113) sur au moins un côté de laquelle est formée la couche de revêtement adhésive (114), et l'indentation est constituée par une trace de l'ouverture d'une section de respiration d'un moule (101) qui fait saillie à partir de la surface du moule.

2. Cache du type panneau selon la revendication 1, dans lequel la couche de revêtement adhésive est recouverte par une feuille de protection détachable (115).

3. Moule utilisé pour mouler le panneau en polystyrène mousse du cache selon la revendication 1 ou 2, comprenant une partie de moule mobile et une partie de moule fixe, la partie de moule mobile et la partie de moule fixe comprenant au moins une ouverture des parcours de respiration sur leurs surfaces et la ou les ouvertures du ou des parcours de respiration de la partie mobile du moule et/ou de la partie fixe du moule fait ou font saillie à partir de ladite surface ou surfaces.

4. Procédé de revêtement comprenant la fixation d'un cache du type panneau selon l'une quelconque des revendications 1 à 3 sur une partie d'un article à protéger, l'application d'un matériau de revêtement sur la partie dudit article, et le retrait dudit cache du type panneau de ladite partie de l'article.

5. Procédé de revêtement selon la revendication 4, dans lequel l'article est constitué par le côté inférieur du plancher d'une voiture.

6. Article traité par le procédé de revêtement selon la revendication 4 ou 5.

**Patentansprüche**

1. Plattenförmiges Abdeckelement mit einer geschäumten, durch Verarbeiten expandierbarer Teilchen hergestellten Polystyrolplatte (111) und einer auf einer Seite der geschäumten Polystyrolplatte (111) ausgebildeten Haftschicht (114), **dadurch gekennzeichnet, daß** die geschäumte Polystyrolplatte mindestens eine Ausnehmung (113) auf mindestens einer Seite, auf der die Haftschicht (114) ausgebildet ist, aufweist und die Ausnehmung ein Abdruck eines Öffnungsbereichs eines Lüftungsteils einer Form (101) ist, der von der Oberfläche der Form vorsteht.

2. Plattenförmiges Abdeckelement nach Anspruch 1, wobei die Haftschicht mit einer Abziehschicht (115) bedeckt ist.

3. Form zum Formen der geschäumten Polystyrolplatte des Abdeckelements nach Anspruch 1 oder 2, mit einem beweglichen Formteil und einem festen Formteil, wobei das bewegliche Formteil und das feste Formteil auf ihren Oberflächen mindestens einen Öffnungsbereich der Lüftungsöffnungen aufweisen und der Öffnungsbereich bzw. die Öffnungsbereiche der Lüftungsöffnung(en) des beweglichen Formteils und/oder des festen Formteils von der Oberfläche vorstehen.

4. Beschichtungsverfahren durch Anbringen eines plattenförmigen Abdeckelements nach einem der Ansprüche 1 bis 3 an einen zu schützenden Bereich eines Gegenstandes, Aufbringen eines Beschichtungsmaterials auf dem Bereich des Gegenstandes und Entfernen des plattenförmigen Abdeckelements von dem Bereich des Gegenstandes.

5. Beschichtungsverfahren nach Anspruch 4, wobei der Gegenstand die Unterseite eines Fahrzeugbodens ist.

6. Gegenstand, behandelt durch ein Beschichtungsverfahren nach Anspruch 4 oder 5.

# FIG.1

# FIG.2

# FIG.3

# FIG.4

# FIG.5

# FIG.6

# FIG.7

# FIG. 8

# FIG. 9

# FIG.10